# EUROPÄISCHE PATENTSCHRIFT

(11) **EP 1 290 353 B1**
(45) Veröffentlichungstag und Bekanntmachung des Hinweises auf die Patenterteilung: **27.10.2004**
(21) Anmeldenummer: 01945215.0
(22) Anmeldetag: 30.05.2001
(51) Int. Cl.: F16D 65/12

(54) **BREMSSCHEIBE FÜR EINE SCHEIBENBREMSE**
BRAKE DISK FOR A DISK BRAKE
DISQUE DE FREIN POUR UN FREIN A DISQUE

(30) Priorität: 16.06.2000 DE 10028958
(43) Veröffentlichungstag der Anmeldung: 12.03.2003
(73) Patentinhaber: SAB WABCO GmbH, 42859 Remscheid (DE)
(72) Erfinder: LEHMANN, Wolfgang, 42859 Remscheid (DE); GRONEMANN, Manfred, 42855 Remscheid (DE); RUPPERT, Helmut, 42857 Remscheid (DE); WATSON, John, Bromborough, Merseyside L62 4TR (GB)
(74) Vertreter: Gerbaulet, Hannes, Dipl.-Ing.
(86) Internationale Anmeldenummer: PCT/EP2001/006152
(87) Internationale Veröffentlichungsnummer: WO 2001/096758

(56) Entgegenhaltungen:
- EP-A- 0 085 361
- EP-A- 0 644 349
- DE-A- 1 952 313
- DE-A- 2 060 352
- DE-A- 3 432 501
- DE-A- 3 814 614
- GB-A- 1 080 035
- US-A- 5 988 761

## Beschreibung

### Technisches Gebiet

Die Erfindung betrifft eine Bremsscheibe für eine Scheibenbremse, insbesondere für Schienenfahrzeuge. Diese enthält einen Nabenkörper mit sich radial nach außen erstreckendem Nabenflansch mit achsparallelen Durchbrechungen, in welchen Schrauben angeordnet werden können, um einen radial überlappend und axial benachbart zum Nabenflansch angeordneten Bremsringflansch eines Bremsringes mit dem Nabenkörper zu verbinden und einen Bremsring für eine Scheibenbremse, insbesondere für Schienenfahrzeuge, enthaltend einen sich radial erstreckenden Bremsringflansch mit achsparallelen Durchbrechungen, in welchen Schrauben angeordnet werden können, um einen radial überlappend und axial benachbart zum Bremsringflansch angeordneten Nabenflansch eines Nabenkörpers mit dem Bremsring zu verbinden.

### Stand der Technik

Scheibenbremsen der eingangs genannten Art sind zum Beispiel aus der DE 26 20 623 A1 (Figuren 1 und 2) bekannt. Sie bestehen aus einem Nabenkörper, welcher drehfest auf der Welle einer Achse des Fahrzeuges angeordnet wird, sowie einem mit dem Nabenkörper verbundenen Bremsring. Der Bremsring weist an mindestens einer Außenseite eine Reibfläche auf, an welcher Bremsbacken angreifen und durch einen entsprechenden Druck auf die Reibfläche die gewünschte Bremswirkung ausüben können. Die Verbindung zwischen dem Nabenkörper und dem Bremsring erfolgt über eine Verschraubung des Nabenflansches mit dem Bremsringflansch. Die genannten Flansche stehen radial vom Nabenkörper bzw. Bremsring ab, überlappen sich in radialer Richtung und sind axial benachbart zueinander angeordnet. Die Angaben "radial" und "axial" oder "achsparallel" beziehen sich auf die Drehachse der Bremsscheibe (gleich der Achse der Welle, an welcher die Bremsscheibe angebracht ist), welche in der Regel zugleich eine Symmetrieachse der Bremsscheibe ist. Weiterhin können die Flansche sowohl durchgehend umlaufend als auch wellenförmig umlaufend ausgebildet sein, wobei sie im letzteren Falle aus benachbarten Nocken bestehen. Die Schrauben zur Befestigung des Bremsringes am Nabenkörper durchsetzen im Wesentlichen miteinander fluchtende Durchbrechungen im Nabenflansch und im Bremsringflansch.

Es ist bekannt, dass sich bei Scheibenbremsen der genannten Art der Bremsring bei Bremsvorgängen infolge der eintretenden Erwärmung ausdehnt, während der Nabenkörper keine vergleichbare Ausdehnung erfährt. Zur Aufnahme beziehungsweise zum Ausgleich der hierdurch zwischen Bremsring und Nabenkörper auftretenden Wärmedehnungen ist eine Vielzahl von Konstruktionen bekannt.

So zeigt beispielsweise die DE-B 10 31 337 eine Scheibenbremse der eingangs genannten Art, bei welcher die Verschraubung zwischen Nabenflansch und Bremsringflansch so ausgeführt ist, dass eine radiale Relativbewegung zwischen beiden Körpern möglich ist. Insbesondere sind vier über den Umfang gleich beabstandete Radialschlitze im Bremsringflansch vorgesehen, in welchen die sie durchsetzenden Schrauben radial wandern können. Problematisch bei einer derartigen Konstruktion ist jedoch die Gefahr, dass bei Wärmedehnungen die Schrauben ihre zur Achse der Scheibenbremse parallele Lage verlieren können. So können insbesondere die Schraubenköpfe ihre Lage relativ zum Nabenflansch, auf dem sie aufliegen, beibehalten, während der Verschraubungsabschnitt im Bremsringflansch liegt und von diesem bei einer Wärmedehnung radial nach außen versetzt wird. Dies führt zu erheblichen Biegebeanspruchungen der Schrauben, welche zu einem erhöhten Verschleiß, vorzeitiger Ermüdung und im schlimmsten Falle zu einem Versagen der Schrauben führen können.

Zur Vermeidung der genannten Biegebeanspruchungen der Schrauben ist aus der DE-A 28 28 137 bekannt, in einer Scheibenbremse der eingangs genannten Art sowohl die Schraubenköpfe als auch die Muttern in sphärischen Lagerschalen zu lagern, wodurch sich die Schrauben ohne wesentliche Biege- und Scherbeanspruchungen aus ihren achsparallelen Lagern schwenken können. Diese Ausführungsform ist jedoch sehr aufwendig und daher teuer und führt bei Wärmedehnungen zu unerwünschten Änderungen der Schraubenvorspannung.

Des weiteren ist aus der DE 34 32 501 C2 eine Scheibenbremse der eingangs genannten Art bekannt, bei welcher der Bremsringflansch wärmedehnungsbeweglich zwischen dem Nabenflansch und einem separaten Spannring angeordnet ist, wobei die Schrauben den Nabenflansch gegen den Spannring axial verspannen. Die jeweiligen Enden der Schrauben sind somit im Nabenflansch beziehungsweise im Spannring gelagert und damit in zwei Elementen, die in der Regel keiner Relativbewegung bei der Wärmedehnung unterliegen. Nachteilig ist allerdings, dass zusätzliche Mittel zur Drehmomentübertragung zwischen dem Nabenkörper und dem Spannring vorgesehen sein müssen, damit keine senkrecht zur radialen Richtung auftretenden Biegebeanspruchungen der Schrauben entstehen. Durch diese Mittel werden sowohl der Bauaufwand erhöht als auch die Montage erschwert. Bei innen belüfteten Scheibenbremsen kann zudem der Spannring die Kühlluftzufuhr zur Bremsscheibe erheblich behindern. Weiterhin ist es möglich, dass bei einer Wärmedehnung die Kräfte am Spannring in Bezug auf die Drehachse der Scheibenbremse asymmetrisch auftreten und dass es hierdurch doch zu den unerwünschten Biegebeanspruchungen der Schrauben kommt.

Aus der DE-OS 20 60 352 ist eine mehrteilige Bremsscheibe bekannt, bei der an einer Nabe sich radial nach außen erstreckende Nocken vorgesehen sind, die achsparallele Durchbrechungen aufweisen, um einen überlappend angeordneten Nocken eines Bremsringes mittels entsprechender Schrauben zu befestigen, wobei jeweils zwei voneinander beabstandete Nocken mit jeweils einer Durchbrechung vorgesehen sind, durch welche die Enden der Schraube gehalten werden können. Es ist dabei vorgesehen, die Befestigungsschrauben für den aus Bremsringsegmenten bestehenden Bremsring als Passschrauben auszubilden. Um die Schraubverbindung axial spielfrei, in Grenzen nachstellbar und zusätzlich kraftschlüssig auszugestalten, ist dabei jeder Nocken über Buchsen gegen die Stimfläche an der Nabe verspannt.

### Darstellung der Erfindung, Aufgabe, Lösung, Vorteile

Vor diesem Hintergrund war es Aufgabe der vorliegenden Erfindung, einen Nabenkörper, einen Bremsring und eine Bremsscheibe der eingangs genannten Art mit konstruktiv einfachen Mitteln derart zu verbessern, dass bei Wärmedehnungen des Bremsringes die Achsparallelität der Schrauben, die den Bremsringflansch mit dem Nabenflansch verbinden, gewährleistet ist.

Diese Aufgabe wird durch eine Bremsscheibe mit den in Anspruch 1 genannten Merkmalen gelöst. Vorteilhafte Ausgestaltungen sind in den Unteransprüchen enthalten.

Eine aus dem Stand der Technik bekannte Bremsscheibe, welche insbesondere für Schienenfahrzeuge geeignet ist, weist einen sich radial nach außen erstreckenden Nabenflansch mit achsparallelen Durchbrechungen auf, wobei wie oben erläutert die Begriffe "radial" und "achsparallel" sich auf die Drehachse der Bremsscheibe beziehen und der Nabenflansch auch wellenförmig aus Nocken gebildet sein kann. In den achsparallelen Durchbrechungen können Schrauben angeordnet werden, um den Bremsringflansch eines Bremsringes mit dem Nabenkörper zu verbinden, wobei der Bremsringflansch zumindest teilweise radial überlappend sowie in axialer Richtung gesehen benachbart zum Nabenflansch angeordnet ist. Auch der Bremsringflansch kann wellenförmig aus Nocken gebildet sein. Der Nabenkörper ist dadurch gekennzeichnet, dass bei mindestens einer der genannten Durchbrechungen im Nabenflansch ein Halteelement angeordnet ist, welches am Nabenkörper fixiert ist und durch welches das Ende einer Schraube nach deren Durchtritt durch den Bremsringflansch gehalten werden kann. Die Fixierung des Halteelementes muss nicht vollständig sein, sondern kann insbesondere eine gewisse Beweglichkeit in axialer Richtung zulassen. Wichtig ist vor allem eine Fixierung gegenüber radialen Bewegungen. Vorzugsweise ist bei allen, mindestens jedoch bei drei über den Umfang verteilt angeordneten Durchbrechungen ein Halteelement angeordnet.

Bei dieser Bremsscheibe werden somit beide Enden der Schrauben, die den Nabenflansch mit dem Bremsringflansch verbinden, relativ zum Nabenkörper fixiert. Das erste Ende der Schraube, das zum Beispiel der Schraubenkopf sein kann, wird in einer Durchbrechung am Nabenflansch gelagert. Die Schraube durchtritt dann den Bremsringflansch, und ihr zweites Ende wird in dem Halteelement gehalten, welches am Nabenkörper fixiert ist und diese Fixierung auf das Schraubenende überträgt. Durch die beidendseitige radiale Fixierung der Schrauben ist deren achsparallele Lage auch bei Wärmedehnungen des Bremsringes gewährleistet. Dies ist bei der Verwendung von mehreren Halteelementen auch dann der Fall, wenn die Kräfte aufgrund der Wärmedehnung nicht symmetrisch bezüglich der Drehachse der Scheibenbremse auftreten sollten. Durch Radialführungen kann sichergestellt werden, dass der Bremsring auch bei Wärmedehnungen immer relativ zur Achse der Scheibenbremse zentriert bleibt.

Gemäß einer aus dem Stand der Technik bekannten Ausgestaltungsform der Halteelemente können diese als ein am Nabenkörper ausgebildeter, sich radial nach außen erstreckender Haltenocken oder als ein umlaufender Halteflansch am Nabenkörper ausgebildet sein. Die Ausbildung des Halteelementes als ein Haltenocken am Nabenkörper hat den Vorteil, dass zwischen zwei derartigen Nocken ein Freiraum bleibt, durch welchen während des Betriebes Kühlungsluft strömen kann. Ferner kann durch den Freiraum ein ebenfalls nockenförmig ausgestalteter Bremsringflansch bei der Montage der Bremsscheibe in einfacher Weise in den Zwischenraum zwischen Nabenflansch und Halteelementen eingeführt werden. Auch die integrale Ausbildung des Halteelementes mit dem Nabenkörper erleichtert die Montage der Bremsscheibe, da die Halteelemente nicht separat montiert werden müssen.

Das am Nabenkörper ausgebildete Halteelement kann eine achsparallele Durchbrechung mit einer darin angeordneten Hülse aufweisen, wobei die Durchbrechung im Halteelement fluchtend zur entsprechenden Durchbrechung im Nabenflansch angeordnet ist. Durch die Hülse kann eine den Nabenflansch und den Bremsringflansch durchsetzende Schraube geführt werden, wobei sich die Hülse dann einseitig auf dem Bremsringflansch abstützt. Die Hülse dient dazu, den Bremsringflansch gegen den Nabenflansch vorzuspannen. Dies geschieht über die Abstützung der Hülse auf dem Bremsringflansch, wobei am gegenüberliegenden Ende der Hülse die Schraube über den Schraubenkopf oder die Mutter auf dem Schraubengewinde angreift. Durch die Lagerung in der Hülse wird die Schraube dabei zusätzlich vor Biegebeanspruchungen geschützt. Dadurch, dass die Hülse in der Durchbrechung des Halteelementes angeordnet ist, wird weiterhin eine mittelbare radiale Fixierung des Schraubenendes relativ zum Nabenkörper erreicht. Gleichzeitig bleibt die Hülse jedoch in der Durchbrechung des Halteelementes achsparallel verschiebbar, so dass sie die gewünschte axiale Vorspannkraft auf den Bremsringflansch übertragen kann.

Ferner können am Nabenflansch und/oder an den Halteelementen mindestens drei über den Umfang gleichverteilt angeordnete Radialführungen vorgesehen sein, welche mit entsprechenden Radialführungen am Bremsringflansch zusammenwirken können, um den Bremsringflansch im Falle einer Wärmeausdehnung radial zu führen und zu zentrieren. Die Gleichverteilung der Radialführungen über den Umfang bedeutet, dass zum Beispiel drei derartige Radialführungen im Abstand von jeweils 120° um die Drehachse der Scheibenbremse herum angeordnet sind. Die Radialführungen sorgen dafür, dass sich der Bremsring zwar in radialer Richtung relativ zum Nabenkörper bewegen und damit einer Wärmeausdehnung folgen kann, dass jedoch keine Relativrotation des Bremsringes um die Drehachse der Scheibenbremse möglich ist und dass somit die Drehmomentübertragung zwischen Bremsring und Nabenkörper und deren relative Lage in Umfangsrichtung gewährleistet bleibt. Gleichzeitig gewährleisten die in verschiedene radiale Richtungen zeigenden Radialführungen, dass Bremsring und Nabenkörper auch bei der Wärmedehnung eine zueinander zentrierte Lage annehmen.

Die oben genannten Radialführungen sind vorzugsweise jeweils als zwei sich parallel zu einem Radius erstreckende Flächen am Nabenflansch und/oder an einem Halteelement ausgebildet, welche mit korrespondierenden Flächen am Bremsringflansch zusammenwirken. Die Erstreckung der Flächen parallel zu einem von der Drehachse der Scheibenbremse ausgehenden Radius gewährleistet, dass die Fläche eine Führung in Richtung dieses Radius ausübt.

Gemäß der vorliegenden Erfindung ist das Halteelement als L-förmiger Haltewinkel ausgebildet, welcher in einem ersten Schenkel eine Durchbrechung zur Durchführung des Schraubenendes aufweist. Ferner ist am Nabenkörper eine axial orientierte Nut vorgesehen, in welcher der zweite Schenkel des genannten Haltewinkels angeordnet werden kann. Die Orientierung der Nut ist als die Richtung vom Boden der Nut zu ihrer Öffnung hin, das heißt parallel zu den Wänden der Nut, definiert. Selbstverständlich lässt sich diese Ausführungsform der Halteelemente mit der oben erläuterten Form kombinieren, da die einzelnen entlang des Umfanges des Nabenkörpers verteilten Halteelemente grundsätzlich unabhängig voneinander sind. Der L-förmige Haltewinkel wird in der axial orientierten Nut am Nabenkörper derart gelagert, dass er in axialer Richtung beweglich bleibt und in radialer Richtung sowie vorzugsweise auch in Umfangsrichtung fixiert ist. Insgesamt wird so die erwünschte radiale Befestigung des Haltewinkels erreicht, wobei der Haltewinkel sich gleichzeitig jedoch beim Festziehen der Schraube axial bewegen und somit die eingestellte Vorspannkraft auf den Bremsringflansch übertragen kann. Die Verwendung von Haltewinkeln hat den Vorteil, dass diese bei der Montage der Scheibenbremse zunächst entfernt werden können, so dass sich Bremsring und Nabenkörper ungehindert zusammensetzen lassen. Erst beim Festziehen der Schrauben werden die Haltewinkel dann nacheinander angebracht. Weiterhin kann durch den Einsatz verschieden dimensionierter Haltewinkel eine einfache Anpassung der Abmessungen von Bremsring und Nabenkörper erfolgen.

Die Erfindung betrifft ferner einen Bremsring für eine Scheibenbremse, insbesondere für Schienenfahrzeuge, enthaltend einen sich radial erstrekkenden Bremsringflansch mit achsparallelen Durchbrechungen, in welchen Schrauben angeordnet werden können, um einen radial überlappend und axial benachbart zum Bremsringflansch angeordneten Nabenflanscheines Nabenkörpers mit dem Bremsring zu verbinden. Der Bremsring ist dadurch gekennzeichnet, dass bei mindestens einer Durchbrechung ein Halteelement angeordnet ist, welches am Bremsring fixiert ist und durch welches das Ende der Schraube nach deren Durchtritt durch den Nabenflansch gehalten werden kann.

Bei einem derartigen Bremsring werden die beiden Enden der Schrauben relativ zum Bremsring fixiert. Der Bremsring verhält sich daher beim Zusammenbau der Scheibenbremse funktionell in gleicher Weise wie der oben erläuterte Nabenkörper. Die oben für die Ausgestaltung des Nabenkörpers erläuterten Möglichkeiten können somit entsprechend auf den Bremsring angewendet werden.

Zur Erfindung gehört weiterhin eine Bremsscheibe, insbesondere eine Bremsscheibe für Schienenfahrzeuge, enthaltend einen Nabenkörper sowie einen hieran befestigten Bremsring. Die Bremsscheibe ist dadurch gekennzeichnet, dass der Nabenkörper in der oben erläuterten Weise ausgestaltet ist und/oder dass der Bremsring in der oben erläuterten Weise ausgestaltet ist, und dass das Ende der Schraube durch das am Nabenkörper bzw. am Bremsring fixierte L-förmige Halteelement gehalten wird. Bei einer derartigen Bremsscheibe wird durch die beidseitige Fixierung der Schraubenenden gewährleistet, dass die Schrauben auch bei einer Wärmeausdehnung des Bremsringes ihre achsparallele Lage beibehalten und die Schrauben sowie der Bremsring bezüglich der Achse der Scheibenbremse zentriert bleiben. Des weiteren wird wie oben in Bezug auf den Nabenkörper erläutert eine Vereinfachung der Montage sowie eine Gewährleistung der Belüftung des Bremsringes erzielt.

Nach einer weiteren Ausführungsform ist vorgesehen, dass die Schraube derart ausgebildet ist, dass erstens der Kopf eine Fläche aufweist, die durch ihre Anlage an einem speziell als Abstützung ausgebildeten Bund der Nabe eine Verdrehsicherung bei Auf- und Abschrauben der Mutter bewirkt und zweitens unterhalb des Kopfes eine Rändelung angebracht ist, die sich bei Montage der Schraube in die Nabe in die Aufnahmebohrung eingräbt und dadurch die Schraube mit festem Klemmsitz in der Nabe festhält, damit sie bei der Montage des Bremsrings nicht mit der Hand in Position gehalten werden muss.

### Kurze Beschreibung der Zeichnungen

Im folgenden wird die Erfindung mit Hilfe der Figuren beispielhaft erläutert. Es zeigen:
- Fig. 1: einen Querschnitt durch eine dem Stand der Technik entsprechende Schraubverbindung eines Nabenkörpers mit einem Bremsring sowie perspektivisch die hierin verwendete Hülse;
- Fig. 2: einen Querschnitt durch eine gegenüber Fig. 1 abgewandelte Ausführungsform der Schraubverbindung und einen Kulissenstein;
- Fig. 3: einen Querschnitt durch eine erfindungsgemäße Ausführungsform und eine perspektivische Ansicht eines darin verwendeten Haltewinkels;
- Fig. 4: eine Aufsicht auf eine aus Nabenkörper und Bremsring zusammengesetzte Bremsscheibe mit teilweise aufgebrochener Oberfläche des Bremsringes;
- Fig. 5: einen Querschnitt entlang der Linie V - V von Figur 4,
- Fig. 6: den Nabenkörper gemäß Fig. 5,
- Fig. 7: eine Teilansicht des Nabenkörpers gemäß Pfeil VII in Fig. 6, und
- Fig. 8: eine vergrößerte Teildarstellung des Nabenkörpers gemäß Fig. 6.

### Bester Weg zur Ausführung der Erfindung

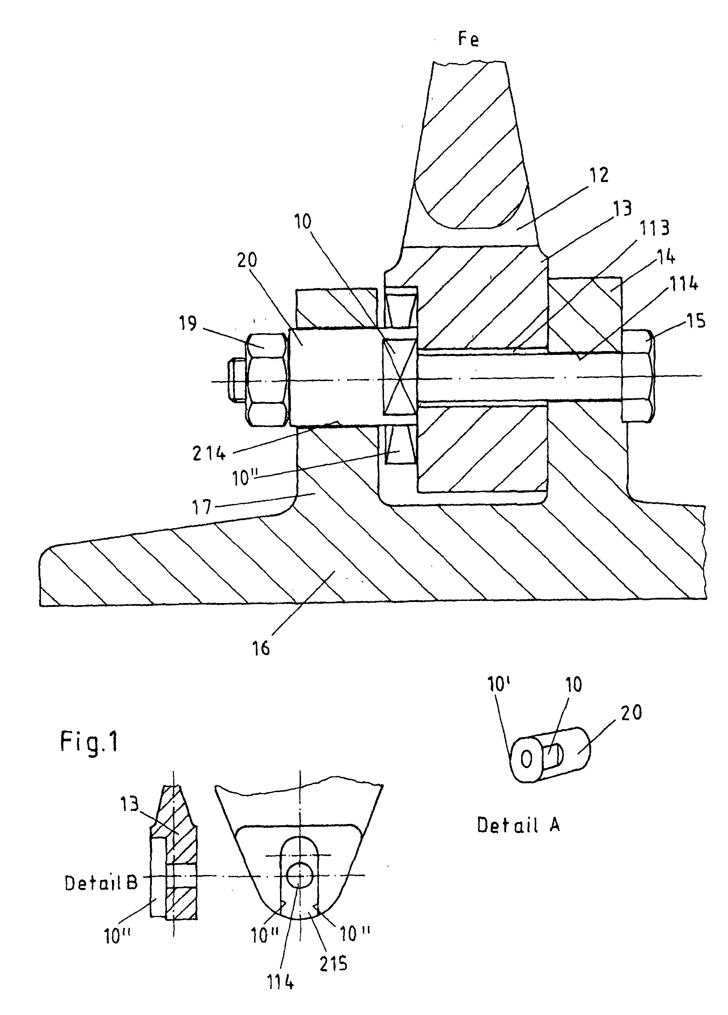

In Figur 1 ist ein Querschnitt durch eine dem Stand der Technik entsprechende Schraubverbindung zwischen einem Nabenkörper 16 und einem Bremsring 12 gezeigt. Der Nabenkörper 16 wird drehfest auf einer Welle der Achse eines Schienenfahrzeuges (nicht dargestellt) angeordnet und drehfest mit dem Bremsring 12 verbunden. Der Bremsring 12 weist an einer oder an zwei Seiten Reibflächen (nicht dargestellt) auf, an welchen Bremsbacken zur Erzeugung der Bremskraft angreifen können. Da es bei einem Bremsvorgang zur Erzeugung von Wärme am Bremsring 12 kommt, muss die Verbindung zwischen Bremsring 12 und Nabenkörper 16 so ausgestaltet werden, dass eine Wärmeausdehnung des Bremsringes 12 erfolgen kann und gleichzeitig ein sicherer und zentrierter Sitz des Bremsringes relativ zum Nabenkörper 16 beziehungsweise zur Drehachse der Bremsscheibe gewährleistet ist. Gleichzeitig ist es wünschenswert, dass die zur Verbindung des Nabenkörpers 16 mit dem Bremsring 12 verwendeten Schrauben 15 im Falle einer Wärmeausdehnung vor Biegebelastungen geschützt sind.

Bei der in Figur 1 dargestellten Bremsscheibe erfolgt die Verbindung zwischen dem Bremsring 12 und dem Nabenkörper 16 über eine Schraube 15, welche eine achsparallele Durchbrechung 114 im sich radial (das heißt in der Zeichnung nach oben) erstreckenden Nabenflansch 14, der integral am Nabenkörper 16 ausgebildet ist, durchsetzt. Weiterhin durchsetzt die Schraube eine achsparallele Durchbrechung 113 im Bremsringflansch 13, welcher am radial inneren Rand des Bremsringes 12 ausgebildet ist und axial benachbart zum Nabenflansch 14 angeordnet ist. Die Fixierung des Bremsringes 12 am Nabenkörper 16 erfolgt durch eine auf das freie Ende der Schraube 15 aufgesetzte Mutter 19 und deren Anziehen mit einem vorgegebenen Anziehdrehmoment (typischerweise 36 Nm). Zwischen der Mutter 19 und dem Bremsringflansch 13 ist dabei eine Hülse 20 angeordnet, durch welche die Schraube 15 hindurch geführt ist und welche sich mit einem Ende auf dem Bremsringflansch 13 abstützt. Am anderen Ende der Hülse 20 liegt die Mutter 19 an, um mittelbar über die Hülse die definierte Vorspannkraft auf den Bremsringflansch 13 auszu-' üben.

Am Nabenkörper 16 ist axial beabstandet zum Nabenflansch 14 ein Haltenocken 17 angeordnet, welcher eine Durchbrechung aufweist, die mit den Durchbrechungen im Nabenflansch 14 und Bremsringflansch 13 fluchtet. In der Durchbrechung des Haltenockens 17 ist die Hülse 20 in enger Passung geführt. Der Haltenocken 17 fixiert somit die Hülse 20 in Bezug auf eine Bewegung in radialer Richtung und in Umlaufrichtung, wodurch gleichzeitig das in der Hülse 20 befindliche freie Ende der Schraube 15 in entsprechender Weise fixiert wird. Dabei ist jedoch eine achsparallele Verschiebung der Hülse 20 in der Durchbrechung des Haltenockens 17 möglich, so dass bei einem Anziehen der Mutter 19 auf der Schraube 15 die Hülse 20 in Richtung des Bremsflansches 13 wandern und dort die gewünschte Vorspannkraft ausüben kann.

Bei der beschriebenen Anordnung sind beide Enden der Schraube 15 in Bezug auf den Nabenkörper 16 fixiert gelagert, so dass die Schraube 15 auch bei einer Wärmeausdehnung des Bremsringes 12 ihre achsparallele Lage beibehalten kann. Hierdurch wird die Belastung der Schraube und damit der Verschleiß und die Zerstörungsgefahr verringert. Gleichzeitig trägt die Hülse 20, welche die Schraube 15 auf einem beträchtlichen Teil von ca. 10 bis 40 % der axialen Ausdehnung umgibt, zu einer Stabilisierung gegenüber Biegebeanspruchungen bei.

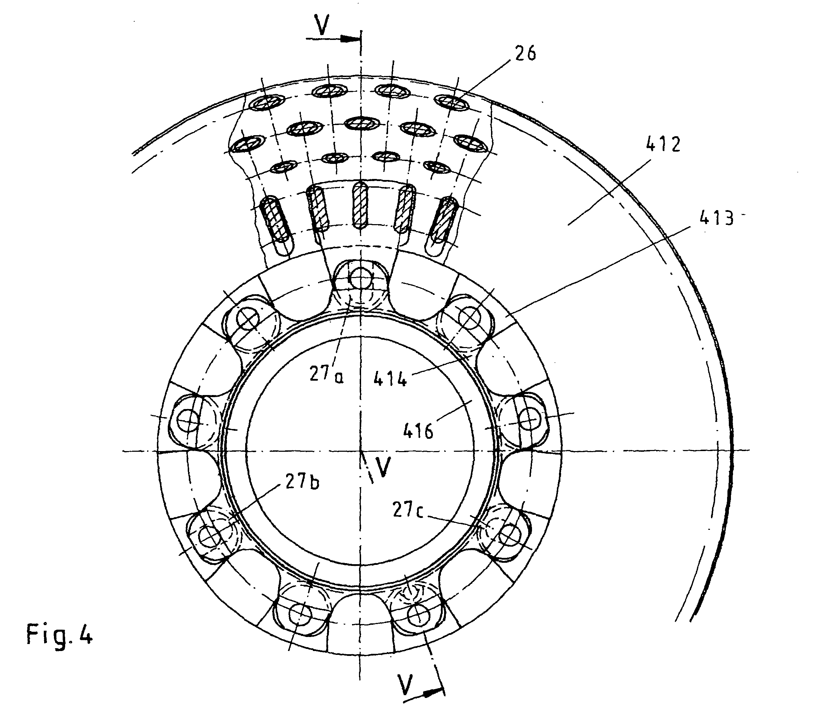

In der in Figur 1 dargestellten Ausgestaltung der Schraubverbindung ist weiterhin eine Radialführung vorgesehen, welche den Bremsring 12 im Falle einer Wärmeausdehnung radial wachsen lässt und gleichzeitig zentriert. Derartige Radialführungen werden vorzugsweise gleichmäßig über den Umfang um die Drehachse der Scheibenbremse herum verteilt vorgesehen, zum Beispiel in Form von drei Radialführungen im Abstand von jeweils 120° (vgl. Figur 4, 27a). Die Radialführung wird bei der Ausführungsform nach Figur 1 dadurch erreicht, dass an dem dem Bremsringflansch 13 zugewandten Ende der Hülse 20 zwei einander bezüglich der Hülsenachse gegenüberliegende Anfräsungen vorgesehen sind, durch welche an der Hülse 20 zwei parallele Flächen 10, 10' ausgebildet werden (Detail A). Weiterhin weist die der Hülse 20 zugewandte Seite des Bremsringflansches 13 eine Einfräsung 215 auf, welche vorzugsweise zwei parallele und in gleichem Abstand zur Durchbrechung für die Durchführung der Schraube 15 ausgebildeten Flächen 10" aufweist. Der Abstand dieser Flächen 10" entspricht dem der parallelen Flächen 10, 10'. Die Hülse füllt den Raum zwischen den Einfräsungen im Bremsringflansch 13 aus. In den durch diese Einfräsung gebildeten Raum greift das dem Bremsringflansch 13 zugewandte Ende der Hülse 20 ein, wobei die angefrästen Flächen 10, 10' der Hülse 20 an den planen Flächen 10" der Einfräsung im Bremsringflansch anliegen. Das Zusammenwirken von Hülse 20 und Flächen 10" sorgt somit im Falle einer Wärmeausdehnung des Bremsringes 12 für eine geführte radiale Beweglichkeit zwischen Hülse 20 und Bremsringflansch 13.

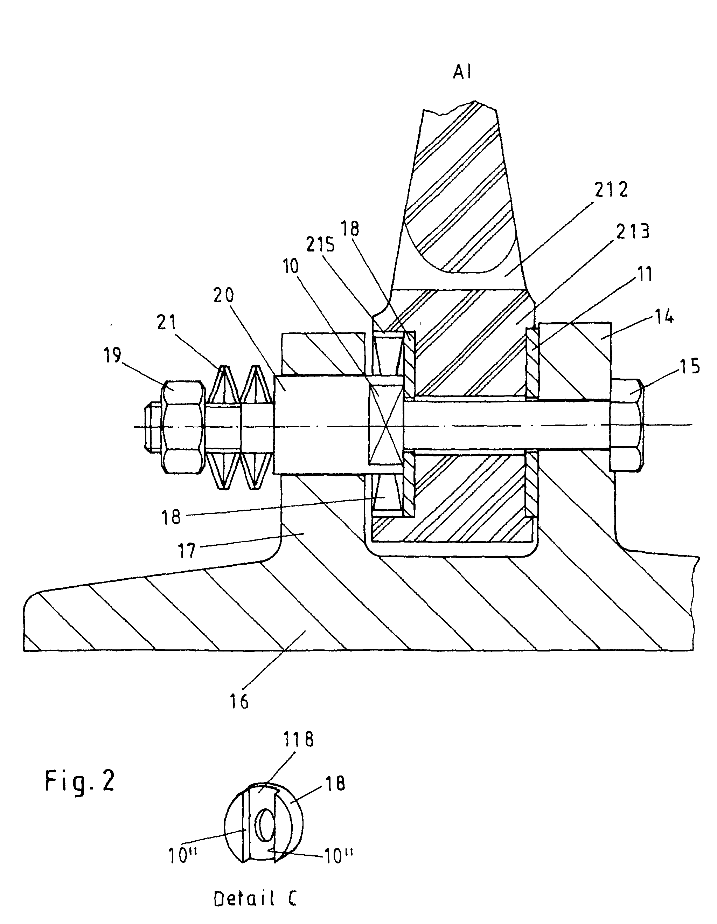

Die in Figur 1 dargestellte Variante ist insbesondere bei der Verwendung von Bremsringen 12 aus Eisen geeignet. Eine Abwandlung dieser Ausführungsform, die sich vorzugsweise für Bremsringe 212 aus Aluminium eignet, ist in Figur 2 dargestellt. Hierbei ist am Nabenkörper 16 axial beabstandet zum Nabenflansch 14 ein Haltenocken 17 angeordnet, welcher eine Durchbrechung konzentrisch zur Durchbrechung für die Durchführung der Hülse 20 aufweist. Der Bremsringflansch weist auf der Seite des Haltenockens 17 eine zylindrische Einfräsung auf. Der Durchmesser dieser Einfräsung ist größer als der Durchmesser der Hülse 20, so dass in der Einfräsung ein Kulissenstein 18 angeordnet werden kann. Der Kulissenstein 18 füllt die Einfräsung im Brensringflansch 213 bis auf eine sich in radialer Richtung erstreckende zentrale Nut 118 aus. In diese Nut 118 greift das dem Bremsringflansch 213 zugewandte Ende der Hülse 20 ein, wobei die angefrästen Flächen 10, 10' der Hülse 20 (Detail A, Fig. 1) an den planen Flächen 10" der Nut im Kulissenstein 18 anliegen (Detail C).

Das Zusammenwirken von Hülse 20 und Kulissenstein 18 sorgt somit im Falle einer Wärmeausdehnung des Bremsringes 212 für eine geführte radiale Beweglichkeit zwischen Hülse 20 und Kulissenstein 18. Gleiche Teile wie bei Figur 1 sind dabei mit gleichen Bezugszeichen versehen und werden nachfolgend nicht erneut erläutert.

Der Unterschied zur Ausführungsform nach Figur 1 besteht zusätzlich darin, dass zwischen der Hülse 20 und der Mutter 19 Spannscheiben 21 angeordnet sind, welche gewährleisten, dass eine definierte axiale Spannkraft zwischen dem Bremsringflansch 213 und dem Nabenflansch 14 unabhängig von der Temperatur des Bremsringflanschs ausgeübt wird. Ferner ist zwischen dem Bremsringflansch 213 und dem Nabenflansch 14 eine weitere Scheibe 11 angeordnet.

Wie aus den Figuren 1 und 2 ersichtlich ist, kann derselbe Nabenkörper 16 mit verschiedenen Bremsringen 12, 212 kombiniert werden. Dies hat den besonderen Vorteil, dass Bremsscheiben in einem modularen System aus verschiedenen Komponenten bedarfsgerecht zusammengestellt werden können, ohne dass stets die komplette Bremsscheibe neu hergestellt werden muss.

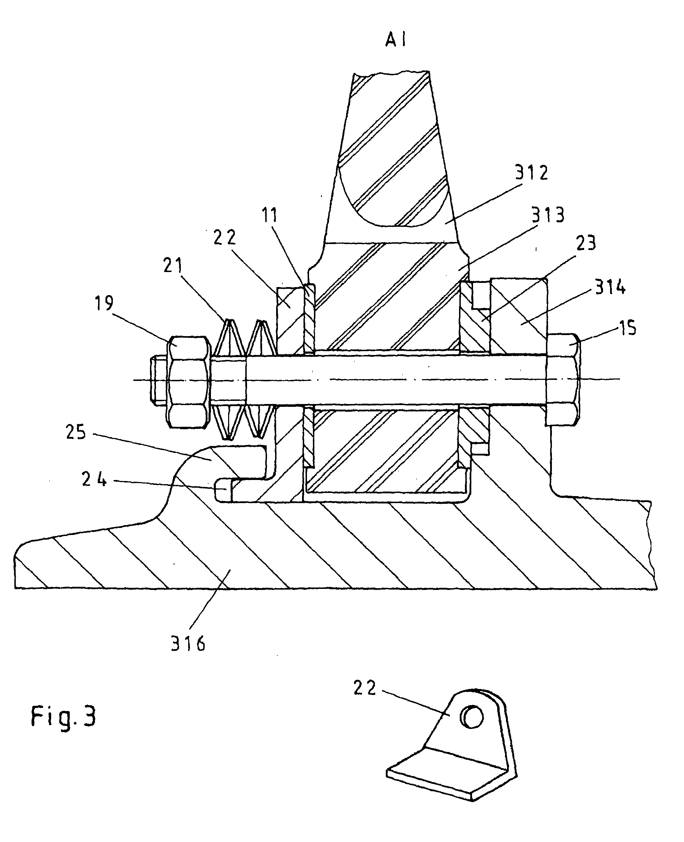

Eine erfindungsgemäße Ausführungsform der Schraubverbindung zwischen einem Nabenkörper 316 und einem Bremsring 312 aus Aluminium ist in Figur 3 dargestellt. Gleiche Elemente wie bei der Ausführungsform nach Figur 1 sind mit den gleichen Bezugszeichen versehen und werden nachfolgend nicht erneut erläutert.

Der wesentliche Unterschied der Ausführungsform nach Figur 3 zu den vorgenannten Ausführungsformen besteht darin, dass anstelle eines Haltenockens 17 ein hakenförmiger Vorsprung 25 am Nabenkörper 316 ausgebildet ist, welcher sich achsparallel erstreckt und hierdurch zum Nabenkörper 316 hin eine ebenfalls achsparallele Nut 24 ausbildet. In diese Nut 24 ist ein Schenkel eines L-förmigen Haltewinkels 22 eingeführt, so dass der Haltewinkel 22 in radialer Richtung fixiert wird, gleichzeitig jedoch in axialer Richtung beweglich bleibt. Der zweite Schenkel des Haltewinkels 22 erstreckt sich radial nach außen (in Figur 3 nach oben). Dieser Schenkel liegt axial benachbart zum Bremsringflansch 313 sowie mittelbar* zum Nabenflansch 314. Durch eine in der Mitte des Schenkels angeordnete Durchbrechung, die mit den Durchbrechungen im Nabenflansch 314 und im Bremsringflansch 313 fluchtet, ist das dem Schraubenkopf gegenüberliegende freie Ende der Schraube 15 geführt. Auf dieses freie Ende ist die Mutter 19 aufgeschraubt, welche über die Spannscheiben 21 eine definierte Spannkraft auf den Haltewinkel 22 ausübt. Aufgrund seiner axial beweglichen Lagerung kann der Haltewinkel 22 diese Spannkraft über die Scheibe 11 auf den Bremsringflansch 313 übertragen.

Des weiteren ist zwischen dem Nabenflansch 314 und dem Bremsringflansch 313 ein Kulissenstein 23 angeordnet, welcher einerseits passgenau in einer entsprechenden Einfräsung in der zugewandten Seite des Bremsflansches 313 radial geführt und andererseits in einer Aussparung des Nabenflansches 314 fixiert wird.

In Figur 4 ist eine Seitenansicht auf eine Bremsscheibe dargestellt, bei welcher die vordere Reibfläche des Reibringes 412 teilweise aufgebrochen dargestellt ist. Durch die etwa bis zur Mittelebene des Bremsringes 412 durchgehende Aufbrechung werden die Verbindungsstege 26 im Schnitt erkennbar, welche die sich einander gegenüberliegenden Reibflächen des Bremsringes 412 miteinander verbinden.

Weiterhin ist erkennbar, dass der Bremsring 412 an seinem Innenrand einen Bremsringflansch in Form von radial nach innen ragenden Nokken 413 aufweist. Diese Nocken 413 sind an entsprechenden Nocken 414 auf dem Nabenkörper 416 befestigt.

Weiterhin ist aus Figur 4 erkennbar, dass drei über den Umfang der Bremsscheibe in einem Winkelabstand von 120° gleichverteilt angeordnete Radialführungen 27a, 27b, 27c ausgebildet sind. In ihrer Zusammenwirkung gewährleisten diese drei Radialführungen, dass der Bremsring 412 im Fälle einer Wärmeausdehnung sich radial bewegen kann und gleichzeitig bezüglich der Drehachse der Scheibenbremse zentriert bleibt. Die Radialführungen werden dadurch realisiert, dass mit dem Bremsringflansch formschlüssig verbundene Kulissensteine in entsprechenden, radial ausgerichteten Führungsnuten des Nabenflansches formschlüssig verbundene Kulissensteine in entsprechenden, radial ausgerichteten Führungsnuten des Bremsrings angeordnet sind. Die übrigen Schraubverbindungen sind allseitig mit einem entsprechenden Spiel ausgestattet, so dass auch sie eine Radialbewegung erlauben.

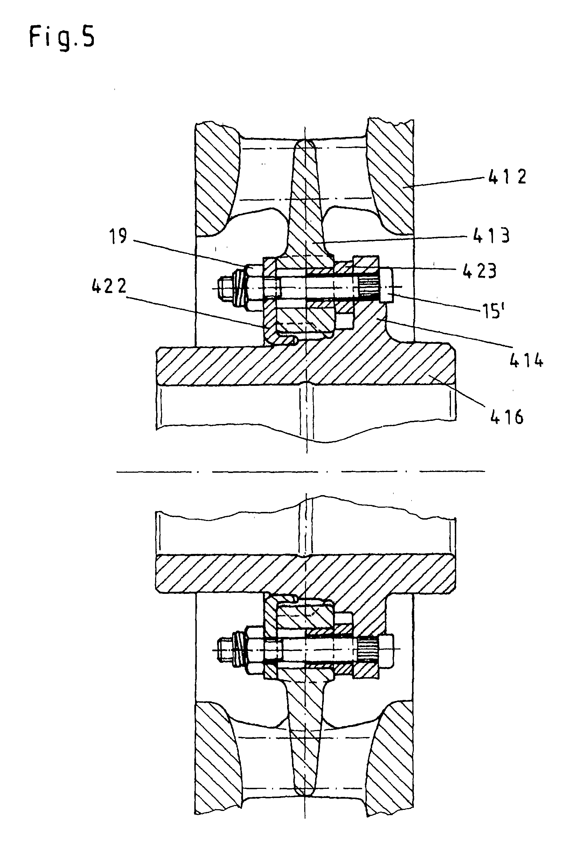

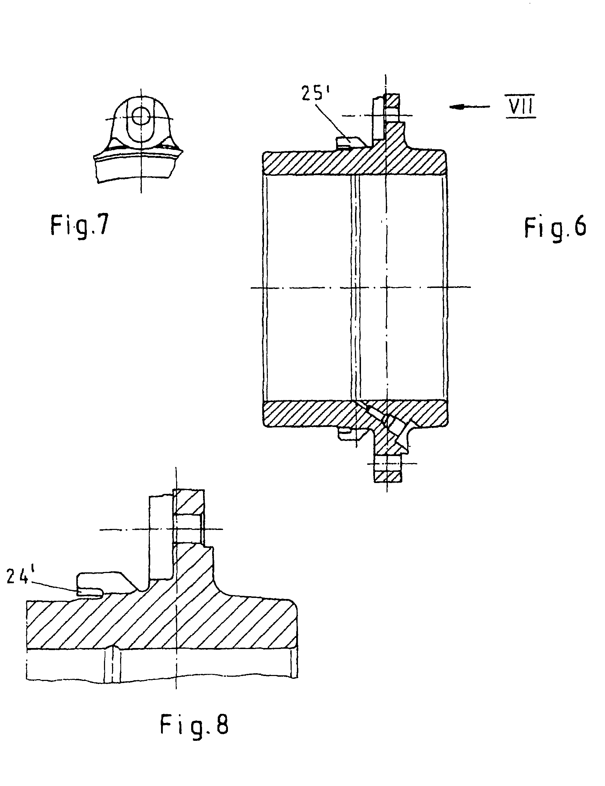

Der Aufbau der Schraubenverbindungen in der Bremsscheibe wird aus dem in Figur 5 dargestellten Schnitt entlang der geknickt verlaufenden Linie V - V von Figur 4 und den Figuren 6 bis 8 erkennbar. Der radial nach innen gerichtete Nocken 413 des Bremsrings 412 ist über eine Schraube 15' mit dem Nabennocken 414 am Nabenkörper 416 verbunden, wobei die Schraube 15' an dem dem Nabennocken 414 gegenüberliegenden Ende in einem Haltewinkel 422 fixiert wird. Die Anordnung entspricht somit im wesentlichen derjenigen aus Figur 3, wobei jedoch der kurze, achsparallele Schenkel des Haltewinkels 422 um 180° gedreht angeordnet ist und somit in Richtung des Nabennockens 414 zeigt. Weiterhin ist erkennbar, dass zwischen dem Nocken 413 des Bremsringes und dem Nabennocken 414 ein Kulissenstein 423 angeordnet ist, welcher in einer radial orientierten Nut im Nocken 414 radial geführt wird. Die Funktionsweise des hakenförmigen Vorsprungs 25' (Fig. 6) und der achsparallelen Nut 24' (Fig. 8) wurden bereits anhand von Fig. 3 erläutert.

Die erfindungsgemäße Ausgestaltung der Scheibenbremse hat den Vorteil, dass eine Ausführung des Nabenkörpers mit verschiedenen Bremsringen - typischerweise in einem Durchmesserbereich von 590 bis über 700 mm - kombiniert werden kann. Ebenso kann eine Nabenausführung mit Bremsringen aus verschiedenen Materialien, zum Beispiel Al (Aluminium-Trägerwerkstoff mit Reibflächen aus Metall-Matrix-Verbundwerkstoff mit SiC Partikeln), CC-SiC (Kohlefaser-Verbundwerkstoff mit SiC infiltriert), GG (Grauguss), GGG (Sphäroguss) oder GS (Stahlguss) verwendet werden.

Eine Montage der Scheibenbremse ist aufgrund ihrer einfachen Konstruktion ohne Spezialwerkzeug möglich. Weiterhin wird durch die Ausbildung von Nockenverbindungen und die dadurch freibleibenden Zwischenräume ein besserer Lüftungswirkungsgrad gewährleistet, welcher sich in einem höheren Energieumsatz oder einer verlängerten Belagstandzeit niederschlägt. Bei gleicher Beanspruchung wird somit eine höhere Lebensdauer des Bremsringes erreicht.

### Bezugszeichen:

- 10, 10', 10": Flächen
- 11: Scheibe
- 12, 212, 312, 412: Bremsring
- 13, 213, 313, 413: Bremsringflansch
- 113: Durchbrechung
- 14, 314, 414: Nabenflansch
- 114: Durchbrechung
- 15, 15': Schraube
- 16,316,416: Nabenkörper
- 17: Haltenocken
- 18: Kulissenstein
- 19: Mutter
- 20: Hülse
- 21: Spannscheibe
- 22, 422: Haltewinkel
- 23, 423: Kulissenstein
- 24, 24': Nut
- 25, 25': Vorsprung
- 26: Verbindungssteg
- 27a, 27b, 27c: Radialführung
- 215: Einfräsung
- 118: Nut

## Patentansprüche

1. Bremsscheibe für eine Scheibenbremse, insbesondere für Schienenfahrzeuge, enthaltend einen Nabenkörper (16) mit einem sich radial nach außen erstreckenden Nabenflansch (14, 314, 414) mit achsparallelen Durchbrechungen (114), in welchen Schrauben (15, 15') angeordnet sind um einen radial überlappend und axial benachbart zum Nabenflansch (14, 314, 414) angeordneten Bremsringflansch (13, 213, 313, 413) eines Bremsringes (12, 212, 312, 412) mit dem Nabenkörper (16, 316, 416) zu verbinden, wobei bei mindestens einer Durchbrechung (114) ein Halteelement angeordnet ist, welches am Nabenkörper (16, 316, 416) fixiert ist und durch welches das Ende einer der Schrauben (15, 15') nach deren Durchtritt durch den Bremsringflansch (13, 213, 313, 413) gehalten werden kann,
**dadurch gekennzeichnet,**
**dass** mindestens eines der Halteelemente als ein L-förmiger Haltewinkel (22, 422) ausgebildet ist, welcher in einem ersten Schenkel eine Durchbrechung zur Durchführung des Endes der Schraube (15, 15') aufweist, und dass am Nabenkörper (316, 416) eine axial orientierte Nut (24, 24') vorgesehen ist, in welcher der zweite Schenkel des Haltewinkels (22) angeordnet ist.

2. Bremsscheibe nach Anspruch 1,
**dadurch gekennzeichnet, dass** am Nabenflansch (314, 414) mindestens drei über den Umfang gleichverteilt angeordnete Radialführungen (27a, 27b, 27c) vorgesehen sind, welche mit entsprechenden Radialführungen am Bremsringflansch (13, 213, 313, 413) zusammenwirken können, um den Bremsringflansch im Falle einer Wärmeausdehnung radial zu führen und zu zentrieren.

3. Bremsscheibe nach Anspruch 2,
**dadurch gekennzeichnet, dass** die Radialführungen (27a, 27b, 27c) jeweils als zwei sich parallel zu einem Radius erstreckende Flächen am Nabenflansch (314, 414) ausgebildet sind, welche mit korrespondierenden Flächen am Bremsringflansch (13, 213, 313, 413) zusammenwirken.

4. Bremsscheibe nach einem der Ansprüche 1 bis 3, **dadurch gekennzeichnet, dass** das Ende der Schraube (15, 15') durch das am Nabenkörper fixierte Halteelement (22, 422) gehalten wird.

5. Bremsscheibe nach einem Ansprüche 1 bis 4, **dadurch gekennzeichnet, dass** die Schraube (15, 15') derart ausgebildet ist, dass der Kopf der Schraube (15, 15') eine Fläche aufweist, die durch ihre Anlage an einem speziell als Abstützung ausgebildeten Bund der Nabe eine Verdrehsicherung bei Auf- und Abschrauben der Mutter bewirkt und unterhalb des Kopfes eine Rändelung angebracht ist, die sich bei Montage der Schraube (15, 15') in die Nabe in die Aufnahmebohrung eingräbt und dadurch die Schraube (15, 15') mit festem Klemmsitz in der Nabe festhält.

## Claims

1. Brake disk for a disk brake, in particular for rail vehicles, containing a hub body (16) with a hub flange (14, 314, 414) extending radially outwards with openings (114) parallel to the axis in which screws (15, 15') are placed in order to connect a brake ring flange (13, 213, 313, 413) of a brake ring (12, 212, 312, 412), brake ring flange which is placed radially overlapping and axially adjacent to the hub flange (14, 314, 414), with the hub body (16, 316, 416), whereby a retaining element is placed for at least one opening (114), retaining element which is fixed to the hub body (16, 316, 416) and through which the end of one of the screws (15, 15') can be held by the brake ring flange (13, 213, 313, 413) after the screw is passed through,
**characterized in**
**that** at least one of the retaining elements is configured as a L-shaped retaining angle steel (22, 422) which has, in a first leg, an opening for passing the end of the screw (15, 15') and that an axially orientated groove (24, 24'), in which the second leg of the retaining angle steel (22) is placed, is provided on the hub body (316, 416).

2. Brake disk according to claim 1,
**characterized in that** at least three radial guides (27a, 27b, 27c) placed uniformly on the periphery are provided on the hub flange (314, 414), whereby these guides can cooperate with corresponding radial guides on the brake ring flange (13, 213, 313, 413) in order to guide radially and center the brake ring flange in case of a thermal dilatation.

3. Brake disk according to claim 2,
**characterized in that** the radial guides (27a, 27b, 27c) are configured respectively as two surfaces on the hub flange (314, 414) extending parallel to a radius which cooperate with corresponding surfaces on the brake ring flange (13, 213, 313, 413).

4. Brake disk according to any of the claims 1 to 3, **characterized in that** the end of the screw (15, 15') is held by the retaining element (22, 422) fixed on the hub body.

5. Brake disk according to any of the claims 1 to 4, **characterized in that** the screw (15, 15') is configured in such a manner that the head of the screw (15, 15') has a surface which, due to its bearing on a shoulder of the hub specially configured as a support, causes a safety against torsion when screwing on and off the nut and a knurl is fit below the head which digs its way into the location hole when mounting the screw (15, 15') and thus fixes the screw (15, 15') press-fitted in the hub.

## Revendications

1. Disque de frein pour un frein à disque, en particulier pour véhicules sur rails, contenant un corps de moyeu (16) avec une bride de moyeu (14, 314, 414) qui s'étend radialement vers l'extérieur avec des découpures parallèles à l'axe (114) dans lesquelles des vis (15, 15') sont placées pour relier une bride de jante de freinage (13, 213, 313, 413) d'une jante de frein (12, 212, 312, 412), bride placée en chevauchant radialement et en étant voisine axialement de la bride de moyeu (14, 314, 414), au corps de moyeu (16, 316, 416), un élément de retenue étant placé pour au moins une découpure (114), élément de retenue qui est fixé sur le corps du moyeu (16, 316, 416) et par lequel l'extrémité de l'une des vis (15, 15') peut être maintenue après avoir traversé la bride de jante de freinage (13,213,313,413),
**caractérisé en ce**
**qu'**au moins l'un des éléments de retenue est configuré comme une cornière de retenue en forme de L (22, 422) qui présente, dans un premier montant, une découpure pour faire traverser l'extrémité de la vis (15, 15') et qu'une rainure orientée axialement (24, 24'), dans laquelle le second montant de la cornière de retenue (22) est placé, est prévue sur le corps de moyeu (316, 416).

2. Disque de frein selon la revendication 1,
**caractérisé en ce qu'**au moins trois guidages radiaux (27a, 27b, 27c) sont prévus sur la bride de moyeu (314, 414) en étant répartis uniformément sur la périphérie, guidages radiaux qui peuvent coopérer avec des guidages radiaux correspondants sur la bride de jante de freinage (13, 213, 313, 413) pour guider radialement et centrer la bride de jante de freinage dans le cas d'une dilatation thermique.

3. Disque de frein selon la revendication 2,
**caractérisé en ce**
**que** les guidages radiaux (27a, 27b, 27c) sont configurés respectivement comme deux surfaces s'étendant sur la bride de moyeu (314, 414) parallèlement à un rayon qui coopèrent avec des surfaces correspondantes sur la bride de jante de freinage (13, 213, 313, 413).

4. Disque de frein selon l'une des revendications 1 à 3, **caractérisé en ce que** l'extrémité de la vis (15, 15') est retenue par l'élément de retenue (22, 422) fixé au corps de moyeu.

5. Disque de frein selon l'une des revendications 1 à 4, **caractérisé en ce que** la vis (15, 15') est configurée de telle manière que la tête de la vis (15, 15') présente une surface qui, par son support sur un épaulement du moyeu configuré spécialement comme appui, provoque une sécurité contre la torsion lors du vissage et du dévissage de l'écrou et qu'en dessous de la tête un moletage est fixé qui, lors du montage de la vis (15, 15') dans le moyeu, s'enfonce dans la forure de logement et qui retient ainsi la vis (15, 15') bien bloquée dans le moyeu.
